# EUROPEAN PATENT APPLICATION

(11) **EP 4 597 603 A1**
(43) Date of publication of application: **06.08.2025**
(21) Application number: 23871939.7
(22) Date of filing: 13.09.2023
(51) Int. Cl.: H01M 4/13, H01B 1/24, H01M 4/131, H01M 4/505, H01M 4/525, H01M 4/62

(54) **POSITIVE ELECTRODE FOR NONAQUEOUS ELECTROLYTE SECONDARY BATTERY, NONAQUEOUS ELECTROLYTE SECONDARY BATTERY USING SAME, AND CONDUCTIVE MATERIAL DISPERSION LIQUID**

(30) Priority: 29.09.2022 JP 2022157074
(71) Applicant: Panasonic Intellectual Property Management Co., Ltd., Kadoma-shi, Osaka 571-0057 (JP)
(72) Inventor: OKAZAKI, Tomohisa, Kadoma-shi, Osaka 571-0057 (JP); MINEGISHI, Shuya, Kadoma-shi, Osaka 571-0057 (JP); UKA, Youichirou, Kadoma-shi, Osaka 571-0057 (JP)
(74) Representative: Novagraaf International SA
(86) International application number: PCT/JP2023/033408
(87) International publication number: WO 2024/070706

(57) **Abstract**

A disclosed positive electrode is a positive electrode for a nonaqueous electrolyte secondary battery. The positive electrode includes a positive electrode mixture layer. The positive electrode mixture layer contains a positive-electrode active material, a conductive material, and a binder. The conductive material includes both carbon black and single-wall carbon nanotubes. The binder includes at least one selected from the group consisting of nitrile group-containing rubber and a cellulose derivative.

## Description

### [Technical Field]

The present disclosure relates to a positive electrode for a nonaqueous electrolyte secondary battery, a nonaqueous electrolyte secondary battery using the same, and a conductive material dispersion liquid.

### [Background Art]

Nonaqueous electrolyte secondary batteries have high output power and high energy density, and accordingly have various uses such as consumer uses and in-vehicle uses. In recent years, there are demands for nonaqueous electrolyte secondary batteries that have higher performance. Various proposals have been made for nonaqueous electrolyte secondary batteries.

PTL 1 (Japanese Laid-Open Patent Publication No. 2020-19705) discloses, as a dispersion liquid to be used to manufacture an electrode, "a carbon nanotube dispersion comprising: bundle-type carbon nanotubes; a dispersion medium; and partially hydrogenated nitrile rubber having a residual double bond (RDB) value of 0.5% by weight to 40% by weight calculated according to the following Mathematical Formula 1, wherein dispersed particle diameters of the carbon nanotubes have a particle size distribution D₅₀ of 3 µm to 10 µm, [Mathematical Formula 1] RDB (% by weight)=BD weight/(BD weight+HBD weight)×100, in Mathematical Formula 1, BD is a conjugated diene-derived structure unit and HBD is a hydrogenated conjugated diene-derived structure unit."

### [Citation List]

### [Patent Literature]

PTL 1: Japanese Laid-Open Patent Publication No. 2020-19705

### [Summary of Invention]

### [Technical Problem]

Carbon nanotubes are likely to agglomerate in a positive electrode slurry and in a positive electrode mixture layer. If carbon nanotubes agglomerate in the positive electrode mixture layer, the internal resistance of the positive electrode becomes high, and battery characteristics deteriorate. Under such circumstances, an object of the present disclosure is to provide a positive electrode that has a low internal resistance.

### [Solution to Problem]

An aspect of the present disclosure relates to a positive electrode for a nonaqueous electrolyte secondary battery. The positive electrode includes a positive electrode mixture layer, the positive electrode mixture layer contains a positive-electrode active material, a conductive material, and a binder, the conductive material includes both carbon black and single-wall carbon nanotubes, and the binder includes at least one selected from the group consisting of nitrile group-containing rubber and a cellulose derivative.

Another aspect of the present disclosure relates to a nonaqueous electrolyte secondary battery. The nonaqueous electrolyte secondary battery includes the positive electrode according to the present disclosure.

Another aspect of the present disclosure relates to a conductive material dispersion liquid. The conductive material dispersion liquid contains at least one selected from the group consisting of nitrile group-containing rubber and a cellulose derivative, a conductive material, and a liquid medium, and the conductive material includes both carbon black and single-wall carbon nanotubes.

### [Advantageous Effects of Invention]

According to the present disclosure, it is possible to obtain a positive electrode that has a low internal resistance. It is possible to obtain a nonaqueous electrolyte secondary battery that has a low internal resistance with use of the positive electrode.

Although novel features of the present invention are described in the appended claims, the following detailed description referring to the drawing will further facilitate understanding of both the configuration and the content of the present invention as well as other objects and features of the present invention.

### [Brief Description of Drawings]

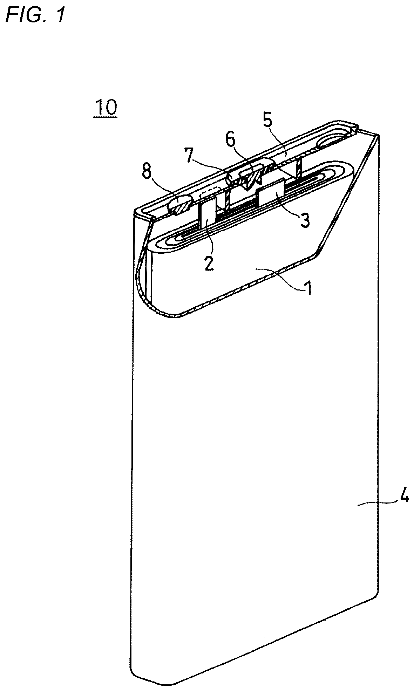

FIG. 1 is a schematic perspective view showing a nonaqueous electrolyte secondary battery according to an embodiment of the present disclosure, from which a portion has been removed.

### [Description of Embodiments]

The following describes an embodiment according to the present disclosure referring to an example, but the present disclosure is not limited to the following example. In the following description, specific numerical values and materials are described as examples, but other numerical values and materials may be applied as long as effects of the present disclosure can be obtained. In the present specification, the wording "from a numerical value A to a numerical value B" refers to a range that includes the numerical values A and B, and can be read as "the numerical value A or more and the numerical value B or less". Examples of a lower limit and examples of an upper limit of numerical values relating to a specific physical property or condition described below can be combined suitably as long as the lower limit is not equal to or higher than the upper limit. When examples of a constituent element or examples of a method are listed in the following description, only one of the listed examples may be used, or two or more of the listed examples may be used in combination, unless otherwise stated.

### (Positive Electrode for Nonaqueous Electrolyte Secondary Battery)

A positive electrode according to the present embodiment is a positive electrode for a nonaqueous electrolyte secondary battery. The positive electrode includes a positive electrode mixture layer. The positive electrode mixture layer contains a positive-electrode active material, a conductive material, and a binder. The conductive material includes both carbon black and single-wall carbon nanotubes. The binder includes at least one selected from the group consisting of nitrile group-containing rubber and a cellulose derivative.

The binder may include both nitrile group-containing rubber and a cellulose derivative. Alternatively, a configuration is also possible in which the binder includes nitrile group-containing rubber but does not include a cellulose derivative. Alternatively, a configuration is also possible in which the binder includes a cellulose derivative (e.g., ethyl cellulose) but does not include nitrile group-containing rubber.

Carbon nanotubes have high electrical conductivity, but are prone to agglomerate. Therefore, there were cases where it was difficult to reduce the internal resistance of a positive electrode even if carbon nanotubes were used. In particular, multiwall carbon nanotubes (MWCNT) are prone to agglomerate and form clusters.

The inventors of the present invention found through studies that it is possible to significantly reduce the internal resistance of a positive electrode by combining the two types of conductive materials and the specific binder. The present disclosure is based on this new finding.

Reasons why the above-described combination reduces the internal resistance of the positive electrode are not clear at present. There is a possibility that the nitrile group-containing rubber suppresses agglomeration of the single-wall carbon nanotubes and improves dispersibility of the single-wall carbon nanotubes. On the other hand, there is a possibility that the cellulose derivative suppresses agglomeration of the single-wall carbon nanotubes and carbon black and improves dispersibility of the conductive material as a whole.

### (Positive-Electrode Active Material)

A substance that can absorb and release lithium ions can be used as the positive-electrode active material. Examples of the positive-electrode active material include a composite oxide containing lithium and a transition metal. The composite oxide may have a layered structure (e.g., a rock salt crystal structure). A composite oxide represented by the composition formula shown above may be used as the positive-electrode active material.

The proportion of cobalt (hereinafter may be referred to as a "cobalt proportion") in elements other than lithium and oxygen contained in the positive-electrode active material may be 10 atom% or less. Cobalt is expensive and its supply stability is low, and therefore, it is preferable to reduce the cobalt proportion. However, if the cobalt proportion is reduced, the internal resistance of the positive electrode may become high. The internal resistance of the positive electrode according to the present embodiment can be reduced by adopting the configuration described above. Therefore, it is possible to reduce the cobalt proportion while maintaining the performance of the positive electrode. The cobalt proportion may be 8 atom% or less, or 5 atom% or less.

The positive-electrode active material may include a composite oxide represented by a composition formula Li_{y}NiₓM₍₁₋ₓ₎O_{2-δ} (where x, y, and δ satisfy 0.6≤x≤1, 0<y≤1.2, and 0≤δ≤0.05, and M includes at least one element selected from the group consisting of Co, Mn, Al, Fe, Ti, Sr, Ca, and B).

In the composition formula shown above, M may be at least one element selected from the group consisting of Co, Mn, Al, Fe, Ti, Sr, Ca, Si, Nb, Zr, Mo, Zn, W, and B. Alternatively, M may be at least one element selected from the group consisting of Co, Mn, Al, Fe, Ti, Sr, Ca, and B. M preferably includes at least one element selected from the group consisting of Co, Mn, Al, and Fe. Note that the value of y showing a composition ratio of lithium in the composition formula shown above increases or decreases through charging and discharging. Specific examples of the composite oxide include a lithium-nickel-cobalt-aluminum composite oxide (e.g., LiNi_{0.9}Co_{0.05}Al_{0.05}O₂).

It is possible to increase the battery capacity by setting x to 0.6 or more in the composition formula of the composite oxide shown above. In the composition formula, x may satisfy 0.8≤x≤1. It is possible to particularly increase the battery capacity by setting x to 0.8 or more (e.g., 0.85 or more, or 0.9 or more).

The composite oxide described above is usually used in the state of particles. The average particle diameter of the composite oxide may be 1 µm or more, or 5 µm or more, and may be 20 µm or less, or 15 µm or less.

In the present specification, an average particle diameter is a median diameter (D50) at which a cumulative volume reaches 50% in a particle size distribution on the volume basis, unless otherwise specified. The median diameter is determined with use of a laser diffraction/scattering particle size analyzer. It is also possible to evaluate particle diameters of particles contained in the positive electrode mixture by observing a cross section of the positive electrode mixture.

The positive-electrode active material may also include particles of the composite oxide described above having an average particle diameter of 1 µm or more and 6 µm or less. It is possible to further increase the capacity of the battery by using active material particles having a small particle diameter.

If the particles of the composite oxide have a large particle diameter, the particles are likely to crack during charging. If the particles crack, generation of gas from particle boundaries and elution of metal from particle boundaries are likely to occur, and the durability of the battery deteriorates. Therefore, it is preferable that the positive-electrode active material includes particles having a small particle diameter.

The positive-electrode active material may also include first particles having an average particle diameter of 1 µm or more and 6 µm or less and second particles of the composite oxide described above having an average particle diameter of 8 µm or more and 20 µm or less. In this case, a peak may appear within a range from about 1 to 6 µm (particle diameter) and a peak may appear within a range from about 8 to 20 µm (particle diameter) in a particle size distribution curve (on the volume basis) of all particles of the composite oxide. It is possible to increase the capacity and the durability of the battery by using the two types of active material particles having different average particle diameters.

A proportion R1 of the mass M1 of the first particles in the particles of the composite oxide described above may be within a range from 10 to 40% by mass (e.g., from 15 to 30% by mass). A proportion R2 of the mass M2 of the second particles in the particles of the composite oxide described above may be within a range from 60 to 90% by mass (e.g., from 70 to 85% by mass).

Contents of elements constituting the composite oxide can be measured with use of inductively coupled plasma atomic emission spectroscopy (ICP-AES), an electron probe micro analyzer (EPMA), or energy dispersive X-ray spectroscopy (EDX), for example.

### (Carbon Nanotubes)

The conductive material includes single-wall carbon nanotubes (SWCNT). The conductive material may further include double-wall carbon nanotubes (DWCNT). The conductive material may further include multiwall carbon nanotubes (MWCNT) having three or more walls. The proportion of multiwall carbon nanotubes having three or more walls in the carbon nanotubes is 10% by mass or less, for example.

A total amount of the single-wall carbon nanotubes and the double-wall carbon nanotubes contained in the positive electrode mixture layer with respect to 100 parts by mass of the positive-electrode active material may be 0.001 parts by mass or more, or 0.01 parts by mass or more, and may be 1 part by mass or less, or 0.5 parts by mass or less. The amount of the single-wall carbon nanotubes contained in the positive electrode mixture layer with respect to 100 parts by mass of the positive-electrode active material may be 0.001 parts by mass or more, or 0.01 parts by mass or more, and may be 1 part by mass or less, or 0.5 parts by mass or less.

The carbon nanotubes may have an average length of 1 µm or more. In this case, the carbon nanotubes have a very large aspect ratio (ratio of the length of a fiber to its diameter). Carbon nanotubes having a large aspect ratio are likely to come into line contact with the positive-electrode active material and the current collector. Furthermore, carbon nanotubes have excellent electrical conductivity. Accordingly, it is possible to significantly reduce the DC resistance (DCR) of the battery with use of the carbon nanotubes. The carbon nanotubes may be present as bundles of a plurality of carbon nanotubes in the positive electrode mixture layer. In this case, the length and the diameter of the carbon nanotubes mean the length and the diameter of each carbon nanotube included in the bundles of carbon nanotubes.

From the viewpoint of increasing the electrical conductivity in the mixture layer, the average length of the carbon nanotubes is preferably 1 µm or more. On the other hand, there is no particular limitation on the upper limit of the length of the carbon nanotubes, but it is preferable that the length of the carbon nanotubes is not too large compared with the particle diameter of the positive-electrode active material. The average length of the carbon nanotubes may be 1 µm or more, or 5 µm or more, and may be 20 µm or less, or 10 µm or less.

The average length of the carbon nanotubes is determined through image analysis performed with use of a scanning electron microscope (SEM). The average length of the carbon nanotubes is determined by measuring lengths of arbitrarily selected 100 carbon nanotubes and calculating an arithmetic average of the lengths. The length of each carbon nanotube is the length of the carbon nanotube extending linearly.

The average diameter of the carbon nanotubes may be 20 nm or less, or 15 nm or less, and may be 1 nm or more. If the average diameter is 20 nm or less, it is possible to obtain a high effect with a small amount of carbon nanotubes. The average diameter of the single-wall carbon nanotubes and the average diameter of the double-wall carbon nanotubes may each be 5 nm or less, for example.

The average diameter of the carbon nanotubes is determined through image analysis performed with use of a transmission electron microscope (TEM). The average diameter of the carbon nanotubes can be measured with use of the following method. First, 100 carbon nanotubes are arbitrarily selected, and the diameter (outer diameter) of each of the selected carbon nanotubes is measured at an arbitrarily selected point on the carbon nanotube. Then, an arithmetic average of the measured diameters is calculated to obtain the average diameter.

### (Carbon Black)

The conductive material includes carbon black. The carbon black may be at least one selected from the group consisting of acetylene black, ketjen black, contact black, furnace black, and lamp black. Among these, acetylene black is preferable because high electrical conductivity can be obtained due to structure formation. The conductive material may also include different types of carbon black.

The amount of carbon black contained in the positive electrode mixture layer with respect to 100 parts by mass of the positive-electrode active material may be 0.01 parts by mass or more, or 0.02 parts by mass or more, and may be 2 parts by mass or less, or 1 part by mass or less.

In both of the case where the carbon material includes double-wall carbon nanotubes and the case where the carbon material does not include double-wall carbon nanotubes, the proportion of the mass of the single-wall carbon nanotubes in a total mass of the carbon black, the single-wall carbon nanotubes, and the double-wall carbon nanotubes may be 10% or less. If the proportion is 10% or less, the carbon nanotubes are unlikely to form agglomerates. The proportion may be 0.001% or more, or 0.01% or more, and may be 1% or less, or 0.5% or less.

The positive electrode mixture layer may also contain a carbon material (conductive material) other than the single-wall carbon nanotubes and the carbon black. A total proportion of the single-wall carbon nanotubes and the carbon black in all carbon materials (conductive materials) may be 80% by mass or more (e.g., from 90 to 100% by mass). If the carbon material includes double-wall carbon nanotubes, a total proportion of the single-wall carbon nanotubes, the double-wall carbon nanotubes, and the carbon black in all carbon materials (conductive materials) may be 80% by mass or more (e.g., from 90 to 100% by mass).

The single-wall carbon nanotubes may have a BET specific surface area of 200 m²/g or more. This configuration makes it easier to secure contact between the single-wall carbon nanotubes and the active material and the carbon black and to obtain the effect of reducing the resistance. The specific surface area of the single-wall carbon nanotubes may be 100 m²/g or more, 200 m²/g or more, or 400 m²/g or more. The upper limit of the BET specific surface area is not particularly limited, but may be 2,000 m²/g or less. The specific surface area of all the carbon nanotubes may be within the above range. The BET specific surface area of the carbon nanotubes can be measured with use of a BET method (nitrogen adsorption method) described in JIS (Japanese Industrial Standard) R1626. Note that the specific surface area of all the carbon nanotubes may be within the above range. If the carbon nanotubes include both single-wall carbon nanotubes and double-wall carbon nanotubes, the specific surface area of all those carbon nanotubes may be within the above range. In general, there is a correlation between the BET specific surface area and the fiber diameter and the fiber length of carbon nanotubes. Specifically, if the fiber diameter is 10 nm and the fiber length is 1 µm, the BET specific surface area is 200 m²/g or more and 250 m²/g or less. Accordingly, it is possible to calculate the BET specific surface area of the carbon nanotubes with high accuracy even in the state where the carbon nanotubes are contained in a battery.

### (Cellulose Derivative)

The cellulose derivative serves as a binder in the positive electrode mixture layer. The cellulose derivative also serves as a dispersant. Examples of the cellulose derivative include alkyl cellulose, hydroxyalkyl cellulose, carboxyalkyl cellulose, and salts (alkali metal salts, ammonium salts, etc.) thereof. Examples of the alkyl cellulose include methyl cellulose, ethyl cellulose, and ethyl methyl cellulose. Examples of the hydroxyalkyl cellulose include hydroxymethyl cellulose, hydroxyethyl cellulose, hydroxypropyl cellulose, and hydroxypropyl methyl cellulose. Examples of the carboxyalkyl cellulose include carboxymethyl cellulose and carboxyethyl cellulose. Examples of alkali metals that form the alkali metal salts include potassium and sodium. Among these, methyl cellulose, ethyl cellulose, and hydroxypropyl methyl cellulose are preferable. The cellulose derivative may be ethyl cellulose.

The cellulose derivative may have a weight average molecular weight within a range from 1,000 to 1,000,000 (e.g., from 10,000 to 1,000,000). From the viewpoint of enhancing the effect of the configuration according to the present disclosure, the weight average molecular weight of the cellulose derivative may be within a range from 10,000 to 200,000.

The amount of cellulose derivative contained in the positive electrode mixture layer with respect to 100 parts by mass of the positive-electrode active material may be 0.0001 parts by mass or more, or 0.001 parts by mass or more, and may be 2 parts by mass or less, or 1 part by mass or less.

### (Nitrile Group-Containing Rubber)

The nitrile group-containing rubber contains a nitrile group. The nitrile group-containing rubber serves as a binder in the positive electrode mixture layer. The nitrile group-containing rubber also serves as a dispersant. If the nitrile group-containing rubber is used, dispersibility of the single-wall carbon nanotubes improves remarkably, and the internal resistance of the positive electrode decreases. Examples of the nitrile group-containing rubber include a copolymer of monomers including acrylonitrile and diene (e.g., butadiene). More specifically, examples of the nitrile group-containing rubber include nitrile rubber (NBR), hydrogenated nitrile rubber (H-NBR), and modified products thereof. The nitrile group-containing rubber may have a weight average molecular weight within a range from 4,000 to 500,000.

The amount of nitrile group-containing rubber contained in the positive electrode mixture layer with respect to 100 parts by mass of the positive-electrode active material may be 0.01 parts by mass or more, or 0.05 parts by mass or more, and may be 1 part by mass or less, or 0.5 parts by mass or less.

A total mass of the carbon black and the single-wall carbon nanotubes contained in the positive electrode mixture layer is denoted by Wc, and a total mass of the cellulose derivative and the nitrile group-containing rubber is denoted by Wb. A ratio Wc/Wb between Wc and Wb may be 1 or more, or 2 or more, and may be 10 or less.

The positive electrode mixture layer may also contain a component other than the components described above or a compound other than the compounds described above. For example, the binder may further include a polyvinylpyrrolidone-based polymer.

### (Polyvinylpyrrolidone-Based Polymer)

The polyvinylpyrrolidone-based polymer is at least one selected from the group consisting of polyvinylpyrrolidone and polyvinylpyrrolidone derivatives. Examples of the polyvinylpyrrolidone derivatives include a polymer formed by substituting a hydrogen atom included in polyvinylpyrrolidone with another substituent, such as alkylated polyvinylpyrrolidone. It is possible to use, as the polyvinylpyrrolidone-based polymer, polyvinylpyrrolidone alone or a copolymer formed by vinylpyrrolidone and another monomer. Examples of the other monomer include a styrene-based monomer and a vinyl acetate-based monomer.

The polyvinylpyrrolidone-based polymer may have a weight average molecular weight within a range from 1,000 to 2,000,000. From the viewpoint of enhancing the effect of the configuration according to the present disclosure, the weight average molecular weight of the polyvinylpyrrolidone-based polymer may be within a range from 5,000 to 1,000,000.

If the positive electrode mixture layer contains the cellulose derivative and the polyvinylpyrrolidone-based polymer, the amount of cellulose derivative with respect to 100 parts by mass of the polyvinylpyrrolidone-based polymer is preferably within a range from 30 to 400 parts by mass (e.g., from 100 to 400 parts by mass, or from 300 to 400 parts by mass). If the amount is within the range from 30 to 400 parts by mass, it is possible to obtain a particularly high effect.

The proportion of the positive-electrode active material in the positive electrode mixture layer is determined with use of a mixture sample. The mixture sample is obtained as follows. First, a discharged secondary battery is disassembled to take out the positive electrode. Next, the positive electrode is washed with an organic solvent and then dried in a vacuum, and thereafter only the positive electrode mixture layer is taken out and used as the mixture sample. It is possible to calculate proportions of the binder and the conductive material other than the positive-electrode active material by analyzing the mixture sample with use of TG-DTA, NMR, or the like. If the conductive material includes a plurality of types of carbon materials, the proportion of carbon nanotubes in the conductive material can be calculated by performing micro-Raman spectroscopy on a cross section of the positive electrode mixture layer.

The mass of the positive electrode mixture layer (single layer) per 1 m² may be 200 g or more, and is preferably 250 g or more. It is possible to increase the capacity of a lithium ion battery including the positive electrode mixture layer by setting the mass to 250 g or more. As described above, a positive electrode plate according to the present disclosure can suppress adverse effects caused by increasing the mass. The mass can be increased by increasing the thickness of the positive electrode mixture layer or the density of the positive electrode mixture layer.

The thickness of the positive electrode mixture layer is not particularly limited, but may be within a range from 50 µm to 250µm. According to the present embodiment, it is possible to suppress an increase in the internal resistance even if the positive electrode mixture layer is made thick.

### (Positive Electrode Slurry and Method for Manufacturing Positive Electrode)

A positive electrode slurry according to the present embodiment is a slurry for a positive electrode of a nonaqueous electrolyte secondary battery. This slurry is used to manufacture the positive electrode described above. Matter described for the positive electrode can be applied to the positive electrode slurry, and therefore, redundant descriptions thereof may be omitted.

The positive electrode slurry contains the above-described components of the positive electrode mixture layer and a liquid medium (dispersion medium) in which the components are dispersed. Specifically, the positive electrode slurry contains a positive-electrode active material, a conductive material, and a binder. The conductive material includes both carbon black and single-wall carbon nanotubes. The binder includes at least one selected from the group consisting of nitrile group-containing rubber and a cellulose derivative. Each component is described above, and therefore, redundant descriptions thereof are omitted. As described above, the cellulose derivative may be ethyl cellulose.

The positive electrode slurry may further contain the optional components described above. For example, the positive electrode slurry may further contain a polyvinylpyrrolidone-based polymer.

The liquid medium (dispersion medium) is not particularly limited, and it is possible to use water, an organic solvent, or a mixed solvent thereof. Examples of the organic solvent include alcohols (e.g., ethanol), ethers (e.g., tetrahydrofuran), amides (e.g., dimethylformamide), and N-methyl-2-pyrrolidone (NMP).

In principle, the ratio between components contained in the positive electrode slurry is reflected in the ratio between those components contained in the positive electrode mixture layer. Accordingly, by changing the ratio between the components contained in the positive electrode slurry, it is possible to change the ratio between those components contained in the positive electrode mixture layer. The ratio between the components described as an example regarding the positive electrode mixture layer can be applied to the ratio between those components contained in the positive electrode slurry.

There is no particular limitation on the method for manufacturing the positive electrode, and a known method may be applied. For example, the positive electrode may be formed with use of the following method. First, the positive electrode slurry is prepared by dispersing materials of the positive electrode mixture layer (the positive-electrode active material, the conductive material, the binder, and other optional components as necessary) in the liquid medium. Next, the positive electrode slurry is applied to a surface of a positive electrode current collector to form a coating film, and then the coating film is dried, and thus the positive electrode mixture layer can be formed. The dried coating film may be rolled as necessary. The positive electrode mixture layer may be formed on one surface of the positive electrode current collector or on both surfaces of the positive electrode current collector.

### (Conductive Material Dispersion Liquid)

A conductive material dispersion liquid according to the present embodiment can be used to prepare the positive electrode slurry. The conductive material dispersion liquid contains at least one selected from the group consisting of nitrile group-containing rubber and a cellulose derivative, a conductive material, and a liquid medium. The conductive material includes both carbon black and single-wall carbon nanotubes. The conductive material, the nitrile group-containing rubber, and the cellulose derivative are described above, and therefore, redundant descriptions thereof are omitted. The conductive material dispersion liquid may contain components (e.g., the above-described optional components) that are optionally contained in the positive electrode mixture layer.

It is possible to use, as the liquid medium of the conductive material dispersion liquid, the liquid mediums described regarding the positive electrode slurry or another liquid medium. Basically, the conductive material dispersion liquid does not contain the positive-electrode active material. The positive electrode slurry can be prepared by adding the positive-electrode active material to the conductive material dispersion liquid. The optional components and the liquid medium of the positive electrode mixture layer may also be added to the conductive material dispersion liquid together with the positive-electrode active material.

By changing the ratio between the components contained in the conductive material dispersion liquid, it is possible to change the ratio between those components contained in the positive electrode mixture layer. The ratio between the components described as an example regarding the positive electrode mixture layer can be applied to the ratio between the components contained in the conductive material dispersion liquid. Specifically, it is possible to determine the ratio between the components from the ratios of the respective components with respect to 100 parts by mass of the positive-electrode active material described as examples regarding the positive electrode mixture layer.

### (Nonaqueous Electrolyte Secondary Battery)

A nonaqueous electrolyte secondary battery according to the present embodiment includes the positive electrode according to the present embodiment. The secondary battery includes at least a negative electrode and a nonaqueous electrolyte in addition to the positive electrode. The secondary battery may include the positive electrode, the negative electrode, the nonaqueous electrolyte, a separator, and an exterior body. Examples of the secondary battery include a lithium ion secondary battery, a lithium metal secondary battery, and the like. There is no particular limitation on the constituent elements other than the positive electrode mixture layer, and it is possible to use known constituent elements. The following describes examples of the constituent elements of the secondary battery.

### (Positive Electrode)

The positive electrode according to the present embodiment is used as the positive electrode.

### (Positive Electrode Current Collector)

The positive electrode may include a positive electrode current collector. The positive electrode mixture layer may be disposed on the positive electrode current collector. The shape and the thickness of the positive electrode current collector can be selected according to an intended use, and can be selected in such a manner as to correspond to the shape and the thickness of a negative electrode current collector. Examples of the material of the positive electrode current collector include stainless steel, aluminum, an aluminum alloy, and titanium. The positive electrode mixture layer may be formed only on one surface of the positive electrode current collector or on both surfaces of the positive electrode current collector.

### (Negative Electrode)

The negative electrode typically includes a negative electrode mixture layer that contains a negative-electrode active material. The negative electrode may include a negative electrode current collector and the negative electrode mixture layer disposed on the negative electrode current collector. However, in the case of a lithium metal secondary battery, a negative electrode current collector on which lithium metal or a lithium alloy can be deposited is used for the negative electrode.

The negative electrode mixture layer contains the negative-electrode active material as an essential component. The negative electrode mixture layer may also contain a binder, a thickener, a conductive material, and the like as optional components. The components described as examples of the components of the positive electrode may be used as the optional components.

The negative electrode mixture layer may be formed by applying a negative electrode slurry obtained by dispersing the constituent components of the negative electrode mixture layer in a liquid medium (dispersion medium) to a surface of the negative electrode current collector, and drying the thus formed coating film. The dried coating film may be rolled as necessary. The liquid mediums described as examples of the liquid medium of the positive electrode slurry may be used as the liquid medium. The negative electrode mixture layer may be formed only on one surface of the negative electrode current collector or on both surfaces of the negative electrode current collector.

### (Negative-Electrode Active Material)

The negative-electrode active material is selected according to the type of the secondary battery. An example of the negative-electrode active material is a substance that can absorb and release lithium ions. Examples of such a substance include a carbonaceous material and a Si-containing material. The negative-electrode active material may include a Si-containing material or may be a Si-containing material. Lithium metal, a lithium alloy, or the like may also be used as the negative-electrode active material. The negative electrode may contain one type of negative-electrode active material or two or more types of negative-electrode active materials in combination.

Examples of the carbonaceous material include graphite, graphitizable carbon (soft carbon), and non-graphitizable carbon (hard carbon). One type of carbonaceous material may be used alone, or two or more types of carbonaceous materials may be used in combination. Graphite is preferable in terms of realizing excellent stability of charging and discharging and a small irreversible capacity. Examples of graphite include natural graphite, artificial graphite, and graphitized mesophase carbon particles.

Examples of the Si-containing material include Si simple substance, a silicon alloy, a silicon compound (e.g., a silicon oxide), and a composite material including silicon phases dispersed in a lithium ion conductive phase (matrix). Examples of the silicon oxide include SiOₓ particles. x satisfies, for example, 0.5≤x<2, and may satisfy 0.8≤x≤1.6. It is possible to use, as the lithium ion conductive phase, at least one selected from the group consisting of a SiO₂ phase, a silicate phase, and a carbon phase.

A metal foil may be used as the negative electrode current collector. The negative electrode current collector may be porous. Examples of the material of the negative electrode current collector include stainless steel, nickel, a nickel alloy, copper, and a copper alloy.

### (Nonaqueous Electrolyte)

The nonaqueous electrolyte (nonaqueous electrolyte solution) includes a solvent (nonaqueous solvent) and a solute dissolved in the solvent. Examples of the solute include a lithium salt. Various additives may be added to the electrolyte solution.

A known material may be used as the solvent. For example, a cyclic carbonate ester, a chain carbonate ester, a cyclic carboxylic acid ester, a chain carboxylic acid ester, or the like is used as the solvent. Examples of the cyclic carbonate ester include propylene carbonate (PC), ethylene carbonate (EC), fluoroethylene carbonate (FEC), and vinylene carbonate (VC). Examples of the chain carbonate ester include diethyl carbonate (DEC), ethyl methyl carbonate (EMC), and dimethyl carbonate (DMC). Examples of the cyclic carboxylic acid ester include γ-butyrolactone (GBL) and γ-valerolactone (GVL). Examples of the chain carboxylic acid ester include nonaqueous solvents such as methyl acetate, ethyl acetate, propyl acetate, methyl propionate (MP), and ethyl propionate (EP). One type of nonaqueous solvent may be used alone, or two or more types of nonaqueous solvents may be used in combination.

Examples of the lithium salt include a lithium salt of chlorine-containing acid (LiClO₄, LiAlCl₄, LiB₁₀Cl₁₀, etc.), a lithium salt of fluorine-containing acid (LiPF₆, LiPF₂O₂, LiBF₄, LiSbF₆, LiAsF₆, LiCF₃SO₃, LiCF₃CO₂, etc.), a lithium salt of fluorine-containing acid imide (LiN(FSO₂)₂, LiN(CF₃SO₂)₂, LiN(CF₃SO₂)(C₄F₉SO₂), LiN(C₂F₅SO₂)₂, etc.), and a lithium halide (LiCl, LiBr, LiI, etc.). One type of lithium salt may be used alone, or two or more types of lithium salts may be used in combination.

The concentration of the lithium salt in the electrolyte solution may be 1 mol/L or more and 2 mol/L or less, or 1 mol/L or more and 1.5 mol/L or less. By setting the concentration of the lithium salt so as to fall within the above range, it is possible to obtain an electrolyte solution that has excellent ion conductivity and appropriate viscosity.

The electrolyte solution may contain a known additive. Examples of the additive include 1,3-propane sultone, methylbenzenesulfonate, cyclohexylbenzene, biphenyl, diphenyl ether, and fluorobenzene.

### (Separator)

The separator is disposed between the positive electrode and the negative electrode. The separator preferably has a high ion permeability, appropriate mechanical strength, and appropriate insulating properties. It is possible to use a microporous thin film, woven fabric, non-woven fabric, or the like as the separator. Examples of the material of the separator include polyolefin (polypropylene, polyethylene, etc.) and other resins.

### (Exterior Body)

An electrode group and the nonaqueous electrolyte are housed in the exterior body (battery case). There is no particular limitation on the exterior body, and it is possible to use a known exterior body. The electrode group is constituted of the positive electrode, the negative electrode, and the separator. There is no particular limitation on the configuration of the electrode group, and the electrode group may be a wound electrode group or a stacked electrode group. The wound electrode group is formed by winding the positive electrode and the negative electrode with the separator disposed therebetween. The stacked electrode group is formed by stacking the positive electrode and the negative electrode with the separator disposed therebetween. The shape of the nonaqueous electrolyte secondary battery is not particularly limited, and may be a cylindrical shape, a rectangular shape, a coin shape, a button shape, a laminate shape, or the like.

FIG. 1 is a schematic perspective view showing a secondary battery 10 according to an embodiment of the present disclosure, from which a portion has been removed. FIG. 1 shows a rectangular nonaqueous electrolyte battery as an example. The secondary battery 10 shown in FIG. 1 includes a battery case 4 having a rectangular tube shape with a bottom, and an electrode group 1 and a nonaqueous electrolyte (not shown) that are housed in the battery case 4.

The electrode group 1 includes a negative electrode having a long band shape, a positive electrode having a long band shape, and a separator disposed between the negative electrode and the positive electrode. A negative electrode current collector included in the negative electrode is electrically connected to a negative electrode terminal 6 provided in a sealing plate 5 via a negative electrode lead 3. The negative electrode terminal 6 is insulated from the sealing plate 5 by a resin gasket 7. A positive electrode current collector included in the positive electrode is electrically connected to the rear surface of the sealing plate 5 via a positive electrode lead 2. A peripheral edge of the sealing plate 5 is fitted to an open end portion of the battery case 4, and the fitted portion is welded with a laser. That is to say, the positive electrode is electrically connected to the battery case 4 that also serves as a positive electrode terminal. The sealing plate 5 has an inlet for the nonaqueous electrolyte. The inlet is closed with a sealing plug 8 after the nonaqueous electrolyte is poured into the battery case.

The positive electrode includes the positive electrode current collector and a positive electrode mixture layer disposed on the positive electrode current collector. The above-described positive electrode mixture layer is used as the positive electrode mixture layer.

### (Supplementary Note)

The above description discloses the following technologies.

### (Technology 1)

A positive electrode for a nonaqueous electrolyte secondary battery, including:
a positive electrode mixture layer,
wherein the positive electrode mixture layer contains a positive-electrode active material, a conductive material, and a binder,
the conductive material includes both carbon black and single-wall carbon nanotubes, and
the binder includes at least one selected from the group consisting of nitrile group-containing rubber and a cellulose derivative.

### (Technology 2)

The positive electrode according to technology 1, wherein the cellulose derivative is ethyl cellulose.

### (Technology 3)

The positive electrode according to technology 1 or 2, wherein the binder includes both the nitrile group-containing rubber and the cellulose derivative.

### (Technology 4)

The positive electrode according to any one of technologies 1 to 3, wherein the conductive material further includes double-wall carbon nanotubes.

### (Technology 5)

The positive electrode according to technology 4, wherein a proportion of a mass of the single-wall carbon nanotubes in a total mass of the carbon black, the single-wall carbon nanotubes, and the double-wall carbon nanotubes is 10% or less.

### (Technology 6)

The positive electrode according to any one of technologies 1 to 5, wherein the binder includes a polyvinylpyrrolidone-based polymer.

### (Technology 7)

The positive electrode according to any one of technologies 1 to 6, wherein a proportion of cobalt in elements other than lithium and oxygen contained in the positive-electrode active material is 10 atom% or less.

### (Technology 8)

The positive electrode according to any one of technologies 1 to 7, wherein the positive-electrode active material includes a composite oxide represented by a composition formula Li_{y}NiₓM₍₁₋ₓ₎O_{2-δ} (where x, y, and δ satisfy 0.6≤x≤1, 0<y≤1.2, and 0≤δ≤0.05, and M includes at least one element selected from the group consisting of Co, Mn, Al, Fe, Ti, Sr, Ca, and B).

### (Technology 9)

The positive electrode according to technology 8, wherein x in the composition formula of the composite oxide satisfies 0.8≤x≤1.

### (Technology 10)

The positive electrode according to any one of technologies 1 to 9, wherein the single-wall carbon nanotubes have a BET specific surface area of 200 m²/g or more.

### (Technology 11)

A nonaqueous electrolyte secondary battery including the positive electrode according to any one of technologies 1 to 10.

### (Technology 12)

A conductive material dispersion liquid including:
at least one selected from the group consisting of nitrile group-containing rubber and a cellulose derivative, a conductive material, and a liquid medium,
wherein the conductive material includes both carbon black and single-wall carbon nanotubes.

### (Technology 13)

The conductive material dispersion liquid according to technology 12, wherein the cellulose derivative is ethyl cellulose.

### (Technology 14)

The conductive material dispersion liquid according to technology 12 or 13, further including a polyvinylpyrrolidone-based polymer.

### (Technology 15)

The conductive material dispersion liquid according to any one of technologies 12 to 14, wherein the conductive material further includes double-wall carbon nanotubes.

### Examples

The following specifically describes the present disclosure based on examples, but the present disclosure is not limited by the following examples. In the examples, a plurality of nonaqueous electrolyte secondary batteries including different positive electrodes were manufactured and evaluated.

### (Manufacture of Battery A1)

A battery A1 was manufactured with use of the following method.

### (1) Manufacture of Negative Electrode

A silicon composite material and graphite were mixed at a mass ratio of silicon composite material:graphite=5:95, and the mixture was used as a negative-electrode active material. The negative-electrode active material, carboxymethyl cellulose sodium (CMC-Na), styrene-butadiene rubber (SBR), and water were mixed at a predetermined mass ratio to prepare a negative electrode slurry. Next, the negative electrode slurry was applied to surfaces of a copper foil (negative electrode current collector) to form a laminate including the copper foil and coating films formed on the copper foil. Next, the coating films were dried, and then the laminate was rolled. Thus, a negative electrode including the copper foil and negative electrode mixture layers formed on both surfaces of the copper foil was formed.

### (2) Manufacture of Positive Electrode

First, a positive electrode slurry SA1 was prepared by mixing a positive-electrode active material, single-wall carbon nanotubes (conductive material), acetylene black (conductive material), hydrogenated nitrile rubber (nitrile group-containing rubber), polyvinylpyrrolidone (PVP), and N-methyl-2-pyrrolidone (liquid medium) at a predetermined mass ratio. Composite oxide particles represented by a composition formula LiNi_{0.90}Co_{0.04}Mn_{0.06}O₂ were used as the positive-electrode active material. Particles A having an average particle diameter (D50) of 14 µm and particles B having an average particle diameter (D50) of 4 µm were mixed at a mass ratio of 7:3 and the mixture was used as the composite oxide particles. The proportion of the single-wall carbon nanotubes and the specific surface area of the single-wall carbon nanotubes are shown in Table 1.

Next, the positive electrode slurry was applied to surfaces of an aluminum foil (positive electrode current collector) to form coating films, and thus a laminate including the aluminum foil and the coating films was obtained. Next, the coating films were dried, and then the laminate was rolled. Thus, a positive electrode PA1 including the aluminum foil and positive electrode mixture layers formed on both surfaces of the aluminum foil was manufactured.

### (3) Preparation of Electrolyte Solution (Nonaqueous Electrolyte)

An electrolyte solution was prepared by adding LiPF₆ (lithium salt) to a nonaqueous solvent. The concentration of LiPF₆ in the electrolyte solution was 1.0 mol/L. A mixed solvent containing ethylene carbonate (EC) and ethyl methyl carbonate (EMC) at a volume ratio of EC:EMC=3:7 was used as the nonaqueous solvent.

### (4) Manufacture of Secondary Battery

Leads were respectively attached to the positive electrode and the negative electrode described above. Next, the positive electrode, the negative electrode, and a separator were spirally wound such that the separator was disposed between the positive electrode and the negative electrode, and thus an electrode group was manufactured. Next, the electrode group was inserted into an exterior body. The exterior body used was formed from a laminate film including an aluminum foil (barrier layer). Next, the exterior body into which the electrode group had been inserted was dried in a vacuum at 105°C for 2 hours, and then the nonaqueous electrolyte solution was poured into the exterior body, and an opening of the exterior body was sealed. Thus, the secondary battery A1 was manufactured.

### (Manufacture of Batteries A2 to A9 and Batteries C1 to C4)

Positive electrode slurries SA2 to SA9 and SC1 to SC4 were prepared using the same method and the same conditions as the method and the conditions used to prepare the positive electrode slurry SA1 of the battery A1, except that the components contained in the positive electrode slurries were changed as shown in Table 1. A composite oxide represented by a composition formula Li_{y}NiₓM₍₁₋ₓ₎O₂, where M represents elements Co and Mn, was used as the composite oxide constituting the positive-electrode active material. Positive electrodes PA2 to PA9 and PC1 to PC4 were manufactured using the same method and the same conditions as the method and the conditions used to manufacture the positive electrode PA1 of the battery A1, except that those positive electrode slurries were used. Batteries A2 to A9 and C1 to C4 were manufactured using the same method and the same conditions as the method and the conditions used to manufacture the battery A1, except that those positive electrodes were used.

### (Evaluation of Battery)

The internal resistances of the manufactured batteries were measured.

Some of the manufacturing conditions and evaluation results are shown in Table 1. Note that the internal resistances of the batteries are expressed by relative values when the measured value of the battery C1 is taken to be 100. In Table 1, "Active material Ni/Co/Mn (composition ratio)" indicates the composition ratio Ni/Co/Mn in the composite oxide. For example, the positive-electrode active material used in the battery A6 is represented by a composition formula Li_{y}Ni_{0.90}Co_{0.04}Mn_{0.06}O₂. In this case, x in the composition formula Li_{y}NiₓM₍₁₋ₓ₎O_{2-δ} representing the positive-electrode active material is 0.90.

In Table 1, "Proportion of SWCNT (% by mass)" indicates the proportion (% by mass) of the single-wall carbon nanotubes (SWCNT) in the conductive material. In Table 1, "Specific surface area of SWCNT" indicates the specific surface area of the single-wall carbon nanotubes.

**[Table 1]**

| Battery | Positive electrode slurry/Positive electrode | Active material Ni/Co/Mn (composition ratio) | Conductive material | Proportion of SWCNT (% by mass) | Specific surface area of SWCNT (m²/g) | Protective material, etc. | Internal resistance of battery (relative value) |
|---|---|---|---|---|---|---|---|
| C1 | SC1/PC1 | 90/4/6 | AB | 0 | 400 | H-NBR, PVP, EC | 100 |
| C2 | SC2/PC2 | 90/4/6 | SWCNT | 100 | 400 | H-NBR, PVP, EC | 84 |
| C3 | SC3/PC3 | 90/4/6 | SWCNT+AB | 5 | 400 | PVP | 95 |
| C4 | SC4/PC4 | 70/20/10 | SWCNT+AB | 5 | 400 | PVP | 98 |
| A1 | SA1/PA1 | 90/4/6 | SWCNT+AB | 5 | 400 | H-NBR | 70 |
| A2 | SA2/PA2 | 90/4/6 | SWCNT+AB | 5 | 400 | H-NBR, PVP | 66 |
| A3 | SA3/PA3 | 90/4/6 | SWCNT+AB | 5 | 400 | H-NBR, PVP, EC | 51 |
| A4 | SA4/PA4 | 90/4/6 | SWCNT+AB | 5 | 400 | PVP, EC | 68 |
| A5 | SA5/PA5 | 90/4/6 | SWCNT+AB | 5 | 400 | PVP, HPMC | 69 |
| A6 | SA6/PA6 | 90/4/6 | SWCNT+AB | 15 | 400 | H-NBR, PVP, EC | 53 |
| A7 | SA7/PA7 | 90/4/6 | SWCNT+AB | 5 | 400 | H-NBR, PVP, EC | 50 |
| A8 | SA8/PA8 | 90/4/6 | SWCNT+AB | 5 | 140 | H-NBR, PVP, EC | 69 |
| A9 | SA9/PA9 | 70/20/10 | SWCNT+AB | 5 | 400 | H-NBR, PVP, EC | 78 |
| AB: acetylene black, SWCNT: single-wall carbon nanotubes | | | | | | | |
| H-NBR: hydrogenated nitrile rubber, PVP: polyvinylpyrrolidone , EC: ethyl cellulose, HPMC: hydroxypropyl methyl cellulose | | | | | | | |

The batteries A1 to A9 and the positive electrode slurries and the positive electrodes used in the manufacture of those batteries are batteries, positive electrode slurries, and positive electrodes according to the present embodiment. The batteries C1 to C4 and the positive electrode slurries and the positive electrodes used in the manufacture of those batteries are comparative examples.

As shown in Table 1, the batteries manufactured with use of the positive electrodes according to the present embodiment had low internal resistances. This is because the positive electrodes according to the present embodiment had low internal resistances.

### [Industrial Applicability]

The present disclosure is applicable to a positive electrode for a nonaqueous electrolyte secondary battery and a nonaqueous electrolyte secondary battery. The secondary battery according to the present disclosure is applicable to various uses, and is preferably used as a main power source of a mobile communication device, portable electronic device, or the like, for example.

Although the present invention has been described in terms of the presently preferred embodiment, it is to be understood that such a disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications that fall within the true spirit and scope of the invention.

### [Reference Signs List]

1: electrode group, 2: positive electrode lead, 3: negative electrode lead, 4: battery case, 5: sealing plate, 6: negative electrode terminal, 7: gasket, 8: sealing plug, 10: secondary battery (nonaqueous electrolyte secondary battery)

## Claims

1. A positive electrode for a nonaqueous electrolyte secondary battery, comprising:
a positive electrode mixture layer,
wherein the positive electrode mixture layer contains a positive-electrode active material, a conductive material, and a binder,
the conductive material includes both carbon black and single-wall carbon nanotubes, and
the binder includes at least one selected from the group consisting of nitrile group-containing rubber and a cellulose derivative.

2. The positive electrode according to claim 1, wherein the cellulose derivative is ethyl cellulose.

3. The positive electrode according to claim 1 or 2, wherein the binder includes both the nitrile group-containing rubber and the cellulose derivative.

4. The positive electrode according to claim 1 or 2, wherein the conductive material further includes double-wall carbon nanotubes.

5. The positive electrode according to claim 4, wherein a proportion of a mass of the single-wall carbon nanotubes in a total mass of the carbon black, the single-wall carbon nanotubes, and the double-wall carbon nanotubes is 10% or less.

6. The positive electrode according to claim 1 or 2, wherein the binder includes a polyvinylpyrrolidone-based polymer.

7. The positive electrode according to claim 1 or 2, wherein a proportion of cobalt in elements other than lithium and oxygen contained in the positive-electrode active material is 10 atom% or less.

8. The positive electrode according to claim 1 or 2, wherein the positive-electrode active material includes a composite oxide represented by a composition formula Li_{y}NiₓM₍₁₋ₓ₎O_{2-δ} (where x, y, and δ satisfy 0.6≤x≤1, 0<y≤1.2, and 0≤δ≤0.05, and M includes at least one element selected from the group consisting of Co, Mn, Al, Fe, Ti, Sr, Ca, and B).

9. The positive electrode according to claim 8, wherein x in the composition formula of the composite oxide satisfies 0.8≤x≤1.

10. The positive electrode according to claim 1 or 2, wherein the single-wall carbon nanotubes have a BET specific surface area of 200 m²/g or more.

11. A nonaqueous electrolyte secondary battery comprising the positive electrode according to claim 1 or 2.

12. A conductive material dispersion liquid comprising:
at least one selected from the group consisting of nitrile group-containing rubber and a cellulose derivative, a conductive material, and a liquid medium,
wherein the conductive material includes both carbon black and single-wall carbon nanotubes.

13. The conductive material dispersion liquid according to claim 12, wherein the cellulose derivative is ethyl cellulose.

14. The conductive material dispersion liquid according to claim 12 or 13, further comprising a polyvinylpyrrolidone-based polymer.

15. The conductive material dispersion liquid according to claim 12 or 13, wherein the conductive material further includes double-wall carbon nanotubes.
